# EUROPÄISCHE PATENTSCHRIFT

(11) **EP 2 604 372 B1**
(45) Veröffentlichungstag und Bekanntmachung des Hinweises auf die Patenterteilung: **22.02.2017**
(21) Anmeldenummer: 11193442.8
(22) Anmeldetag: 14.12.2011
(51) Int. Cl.: B23F 17/00, C21D 1/10, C21D 1/42, C21D 9/32

(54) **Induktive Härtung der Zähne von Getrieberädern**
Inductive hardening of pinion teeth
Durcissement inductif des dents de roues d'engrenage

(43) Veröffentlichungstag der Anmeldung: 19.06.2013
(73) Patentinhaber: Siemens Aktiengesellschaft, 80333 München (DE)
(72) Erfinder: Hamann, Jens, 90765 Fürth (DE); Köpken, Hans-Georg, 91056 Erlangen (DE); Rosenbaum, Björn, 91056 Erlangen (DE); Uhlich, Andreas, 90530 Wendelstein (DE)

(56) Entgegenhaltungen:
- EP-A1- 0 810 048
- WO-A1-2011/020952
- DE-C- 888 141
- US-A1- 2010 202 847
- "5 - Achsen-Fräsen ersetzt klassiches Verzahnen", TECHNISCHE RUNDSCHAU, HALLWAG AG, CH, Bd. 102, Nr. 4, 16. April 2010 (2010-04-16), Seiten 63-66, XP001553338, ISSN: 1023-0823
- MARCUS NUDING: "MF-Umrichtertechnologie zur Vereinfachung induktiver Erwärmprozesse", ELEKTROWÄRME INTERNATIONAL, März 2009 (2009-03), Seiten 24-26, XP009158673,

## Beschreibung

Die vorliegende Erfindung betrifft ein Herstellungsverfahren für ein Getrieberad, wobei ein Getrieberadrohling in einem Werkstückhalter einer Mehrachs-Werkzeugmaschine eingespannt wird.

Große Getrieberäder werden in der Regel als Einzelstücke oder in Kleinserien gefertigt. Im Stand der Technik wird zunächst der Getrieberadrohling in einem Werkstückhalter einer speziellen Verzahnungsmaschine eingespannt. In diesem Zustand werden mittels eines Fräskopfes aus dem Getrieberadrohling Zahnzwischenräume ausgefräst, so dass durch das Ausfräsen der Zahnzwischenräume aus dem Getrieberadrohling ein Zähne aufweisendes Getrieberad wird. Sodann wird das vorgefertigte Getrieberad aus der Verzahnungsmaschine entnommen und in einen Ofen verbracht. Dort wird das Getrieberad als Ganzes aufgeheizt und - in der Regel unter Zugabe von Zusatzstoffen - gehärtet. Sodann erfolgt in einer weiteren Bearbeitungsmaschine eine Nachbearbeitung der Zähne des Getrieberades, beispielsweise ein Nachfräsen oder Nachschleifen.

Die Vorgehensweise des Standes der Technik ist zeitintensiv, teuer und relativ ungenau. Insbesondere durch den Transport des Getrieberades zwischen dem Ausfräsen der Zahnzwischenräume und der Nachbearbeitung der Zähne des Getrieberades kann es zu Ungenauigkeiten bei der Justage des Getrieberades kommen.

Aus dem Fachaufsatz "5-Achsen-Fräsen ersetzt klassisches Verzahnen", erschienen in Spanende Fertigung, Technische Rundschau Nr. 4/2010, ist ein Herstellungsverfahren für ein Getrieberad bekannt, bei dem ein Getrieberadrohling in einem Werkstückhalter einer Mehrachs-Werkzeugmaschine eingespannt wird. Mittels eines in einem Werkzeughalter der Mehrachs-Werkzeugmaschine eingespannten Fräskopfes werden aus dem Getrieberadrohling Zahnzwischenräume ausgefräst, so dass durch das Ausfräsen der Zahnzwischenräume aus dem Getrieberadrohling ein Zähne aufweisendes Getrieberad wird. Sodann wird das Getrieberad aus dem Werkstückhalter ausgespannt, an einen anderen Ort verbracht und dort gehärtet. Schließlich wird das Getrieberad erneut in dem Werkstückhalter eingespannt, und es erfolgt mittels eines in dem Werkzeughalter eingespannten Bearbeitungswerkzeugs eine Nachbearbeitung der Zähne des Getrieberades. Die Mehrachs-Werkzeugmaschine des genannten Fachaufsatzes ist als fünfachsige Werkzeugmaschine ausgebildet.

Aus dem Fachaufsatz "MF-Umrichtertechnologie zur Vereinfachung induktiver Erwärmprozesse" von Marcus Nuding, elektrowärme international, Heft 1/2009, März, Seiten 24 bis 26, ist bekannt, einen Induktor über einen Umrichter zu speisen. Die Betriebsfrequenz und die Ausgangsleistung können dem Umrichter über ein CNC-Programm vorgegeben werden. Der Induktor kann insbesondere zum Härten geometrisch schwieriger Werkstücke verwendet werden.

Aus der WO 2011/020952 A1 ist die Verwendung eines rotierenden Permanentmagneten zur induktiven lokalen Erwärmung eines Werkstücks bekannt. Das Werkstück kann ein Zahnrad sein. Die Erwärmung kann zwischen zwei Bearbeitungsschritten erfolgen. Das Werkstück kann in der Werkzeugmaschine verbleiben. Die Energie zum Erzeugen des Induktionstroms kann vom Motor der Werkzeugmaschine stammen. Es erfolgt jedoch nicht das Speisen eines elektromagnetischen Induktors, sondern das Rotieren eines Permanentmagneten.

Aus der DE 10 2007 051 375 A1 ist bekannt, mittels einer mehrachsigen Werkzeugmaschine ein Zahnrad zu fräsen.

Aus der EP 0 810 048 A1 ist ein kompaktes Bearbeitungszentrum bekannt, das eine Anzahl von komplexen Prozessen wie beispielsweise Drehen, Bohren, Schleifen, Zahnradfertigung, Induktionshärten usw. ausführen kann. Es ist erwähnt, dass die dort genannten Tätigkeiten ausgeführt werden, nachdem das Werkstück einmal eingespannt worden ist. Die EP 0 810 048 A1 erwähnt weiterhin, dass das Fertigungszentrum eine Fünfachsenmaschine ist. Auch erwähnt sie, zum Induktionshärten eine Hochfrequenz-Induktionsspule zu verwenden.

Aus der DE 888 141 C ist ein elektromagnetischer Induktor zum Härten der Zähne eines Zahnrades bekannt. Der Induktor weist eine einzelne Leiterschleife auf.

Die Aufgabe der vorliegenden Erfindung besteht darin, Möglichkeiten zu schaffen, mittels derer ein induktives Härten möglich ist, ohne eine zusätzliche Stromversorgungseinrichtung speziell für den Induktor zu benötigen.

Die Aufgabe wird durch ein Herstellungsverfahren mit den Merkmalen des Anspruchs 1 gelöst. Vorteilhafte Ausgestaltungen des erfindungsgemäßen Herstellungsverfahrens sind Gegenstand der abhängigen Ansprüche 2 bis 9.

Erfindungsgemäß wird zur Realisierung eines Herstellungsverfahrens für ein Getrieberad vorgeschlagen,
- dass ein Getrieberadrohling in einem Werkstückhalter einer Mehrachs-Werkzeugmaschine eingespannt wird,
- dass mittels eines in einem Werkzeughalter der Mehrachs-Werkzeugmaschine eingespannten Fräskopfes aus dem Getrieberadrohling Zahnzwischenräume ausgefräst werden, so dass durch das Ausfräsen der Zahnzwischenräume aus dem Getrieberadrohling ein Zähne aufweisendes Getrieberad wird,
- dass der Werkzeughalter während des Ausfräsens der Zahnzwischenräume aus dem Getrieberohling mittels eines Spindelantriebs rotiert wird,
- dass der Fräskopf aus dem Werkzeughalter ausgespannt wird und ein Induktor in dem Werkzeughalter eingespannt wird,
- dass der Induktor nacheinander zwischen je zwei unmittelbar benachbarte Zähne des Getrieberades eingefahren wird und mindestens einer der beiden unmittelbar benachbarten Zähne mittels des Induktors induktiv erwärmt wird,
- dass der Induktor während des induktiven Erwärmens der Zähne aus einer Stromversorgungseinrichtung des Spindelantriebs mit Wechselstrom versorgt wird,
- dass der Induktor aus dem Werkzeughalter ausgespannt wird und ein Bearbeitungswerkzeug in dem Werkzeughalter eingespannt wird,
- dass mittels des Bearbeitungswerkzeugs eine Nachbearbeitung der Zähne des Getrieberades erfolgt.

Die für den Härtevorgang erforderlichen Zusatzstoffe sind bei der erfindungsgemäßen Vorgehensweise in der Regel bereits im Material des Getrieberadrohlings enthalten.

Die Bearbeitungsschritte des Herstellungsverfahrens sind besonders einfach zu realisieren, wenn die Mehrachs-Werkzeugmaschine als mindestens fünfachsige Werkzeugmaschine ausgebildet ist.

Vorzugsweise ist vorgesehen, dass der jeweils mindestens eine induktiv erwärmte Zahn nach dem Beenden des induktiven Erwärmens mittels eines Kühlmediums aktiv gekühlt wird und dass während des aktiven Kühlens des mindestens einen induktiv erwärmten Zahns der Induktor zwischen zwei andere unmittelbar benachbarte Zähne des Getrieberades eingefahren wird und mittels des Induktors mindestens einer der beiden letztgenannten unmittelbar benachbarten Zähne induktiv erwärmt wird. Diese Vorgehensweise führt zu einer besonders zeiteffizienten Herstellung des Getrieberades.

Vorzugsweise ist vorgesehen, dass der Wechselstrom eine Frequenz zwischen 5 kHz und 40 kHz aufweist. Diese Vorgehensweise führt zu einer guten Energieausnutzung beim Erwärmen der Zähne des Getrieberades. Dies gilt insbesondere, wenn die Frequenz des Wechselstroms bei mindestens 16 kHz liegt, vorzugsweise bei mindestens 32 kHz.

Vorzugsweise wird die Frequenz des Wechselstroms einer Stromversorgungseinrichtung des Induktors von einer Steuereinrichtung der Mehrachs-Werkzeugmaschine vorgegeben.

Vorzugsweise wird die Wechselspannung vor dem Zuführen zum Induktor mittels eines Transformators herunter transformiert. Durch diese Ausgestaltung kann die Stromversorgungseinrichtung als solche besonders kompakt ausgestaltet sein. Dies gilt in ganz besonderem Umfang, wenn ein Übersetzungsverhältnis des Transformators zwischen 5:1 und 20:1 liegt.

Im Stand der Technik ist es üblich, dass der Induktor von einer Stromversorgungseinrichtung mit einphasigem Wechselstrom versorgt wird. Diese Ausgestaltung ist auch im Rahmen der vorliegenden Erfindung möglich. Besonders bevorzugt ist jedoch, wenn der Induktor mit dreiphasigem Wechselstrom versorgt wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen
- FIG 1: eine Mehrachs-Werkzeugmaschine in einem ersten Betriebszustand,
- FIG 2: ein Ablaufdiagramm,
- FIG 3: einen Ausschnitt eines Getrieberades und einen Induktor,
- FIG 4: die Mehrachs-Werkzeugmaschine von FIG 1 in einem zweiten Betriebszustand,
- FIG 5: die Mehrachs-Werkzeugmaschine von FIG 1 in einem dritten Betriebszustand und
- FIG 6 und 7: jeweils einen Induktor und dessen Anschaltung an eine Stromversorgungseinrichtung.

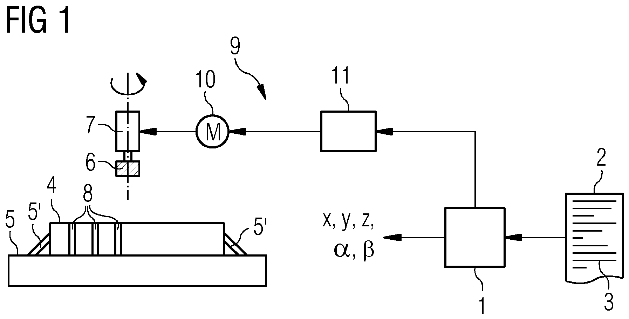

Gemäß FIG 1 wird eine Mehrachs-Werkzeugmaschine von einer Steuereinrichtung 1 gesteuert. Die Mehrachs-Werkzeugmaschine kann nach Bedarf ausgebildet sein. Gemäß FIG 1 ist die Mehrachs-Werkzeugmaschine als mindestens fünfachsige Werkzeugmaschine ausgebildet, d. h. dass sie mindestens fünf lagegeregelte Achsen aufweist. Dies ist in FIG 1 dadurch angedeutet, dass die Steuereinrichtung 1 an die Werkzeugmaschine drei Positionswerte x, y, z und zwei Orientierungswerte α, β ausgibt.

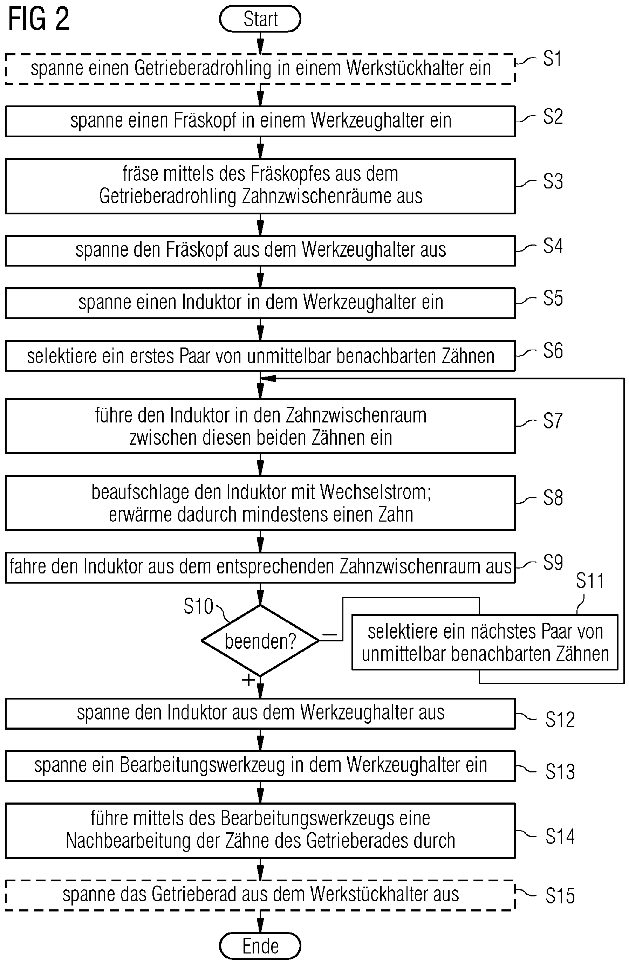

Die Steuereinrichtung 1 ist als softwareprogrammierbare Steuereinrichtung ausgebildet, insbesondere als CNC. Die Wirkungsweise der Steuereinrichtung 1 (und damit auch die Betriebsweise der Mehrachs-Werkzeugmaschine insgesamt) wird durch ein Steuerprogramm 2 bestimmt, mit dem die Steuereinrichtung 1 programmiert ist. Das Steuerprogramm 2 umfasst Maschinencode 3, der von der Steuereinrichtung 1 unmittelbar abarbeitbar ist. Die Abarbeitung des Maschinencodes 3 durch die Steuereinrichtung 1 bewirkt, dass die Steuereinrichtung 1 die Mehrachs-Werkzeugmaschine gemäß einem Herstellungsverfahren steuert, das nachstehend in Verbindung mit FIG 2 detailliert erläutert wird. Ergänzend sind in Verbindung mit der Erläuterung von FIG 2 die FIG 1, 3, 4 und 5 mit heranzuziehen.

Gemäß FIG 2 wird zunächst in einem Schritt S1 ein Getrieberadrohling 4 in einem Werkstückhalter 5 der Mehrachs-Werkzeugmaschine eingespannt. Er wird im Werkstückhalter 5 mittels geeigneter Spanneinrichtungen 5' gehalten. Das Einspannen wird in der Regel von einem Menschen (oder mehreren Menschen) oder einem Roboter durchgeführt. Der Schritt S1 ist in FIG 2 nur gestrichelt dargestellt, um anzudeuten, dass es sich um einen Schritt handelt, der in der Regel nicht von der Steuereinrichtung 1 ausgeführt wird.

In einem Schritt S2 wird ein Fräskopf 6 in einem Werkzeughalter 7 der Mehrachs-Werkzeugmaschine eingespannt. Der Schritt S2 kann von einem Menschen ausgeführt werden. In der Regel wird der Schritt S2 von der Steuereinrichtung 1 im Rahmen der Abarbeitung des Maschinencodes 3 des Steuerprogramms 2 automatisiert gesteuert.

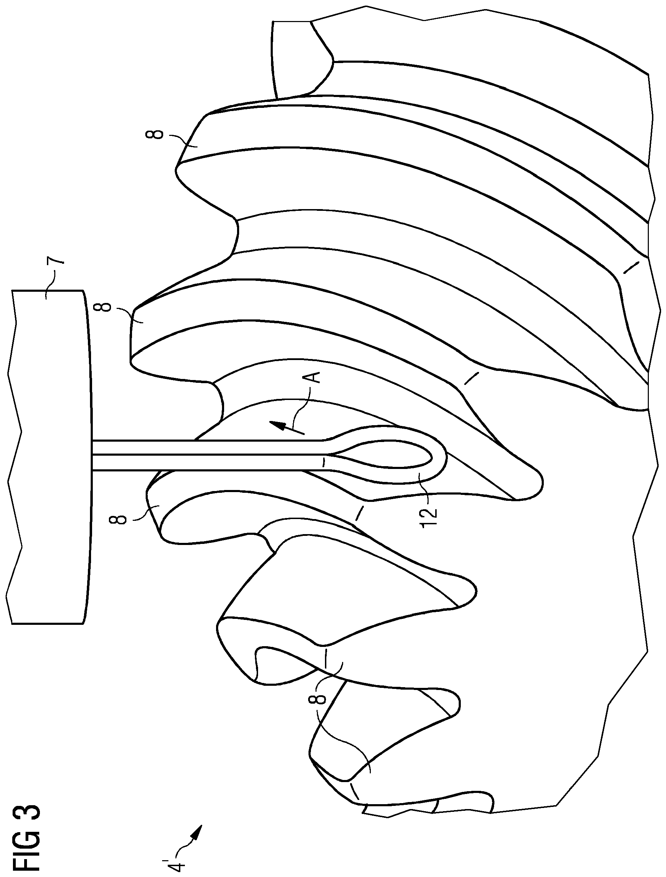

In einem Schritt S3 werden mittels des Fräskopfes 6 aus dem Getrieberadrohling 4 Zahnzwischenräume (siehe FIG 3) ausgefräst. Durch das Ausfräsen der Zahnzwischenräume aus dem Getrieberadrohling 4 wird aus dem Getrieberadrohling 4 ein Getrieberad 4'. Das Getrieberad 4' weist Zähne 8 auf. Während des Ausfräsens der Zahnzwischenräume aus dem Getrieberadrohling 4 wird der Werkzeughalter 7 (und mit ihm der Fräskopf 6) mittels eines Spindelantriebs 9 rotiert. Der Spindelantrieb 9 weist einen Motor 10 und einen Umrichter 11 auf. Der Umrichter 11 entspricht einer Stromversorgungseinrichtung für den Spindelantrieb 9.

Der Schritt S3 wird von der Steuereinrichtung 1 automatisiert gesteuert. Die Implementierung des Schrittes S3 im Rahmen des Steuerprogramms 2 ist Fachleuten geläufig.

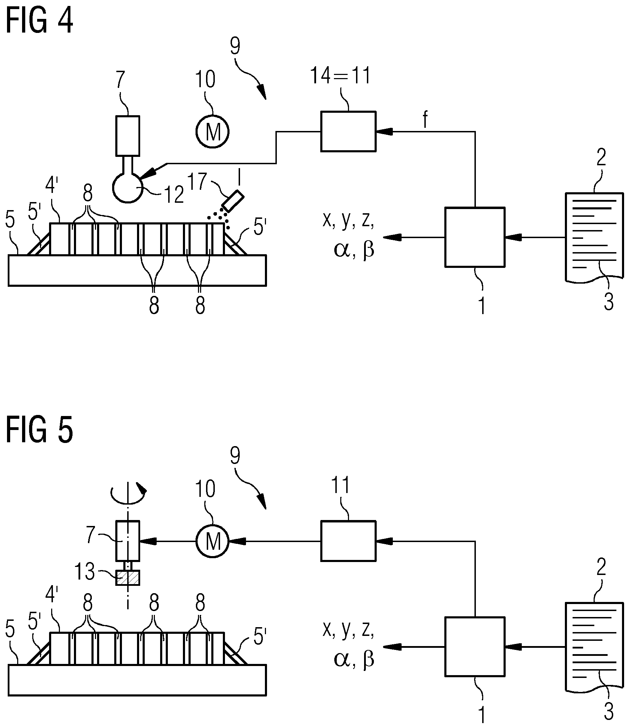

In Schritten S4 und S5 wird zunächst der Fräskopf 6 aus dem Werkzeughalter 7 ausgespannt. Sodann wird ein Induktor 12 in dem Werkzeughalter 7 eingespannt. FIG 4 zeigt den entsprechenden Zustand der Mehrachs-Werkzeugmaschine.

Analog zum Schritt S2 können die Schritte S4 und S5 von einem Menschen ausgeführt werden. Vorzugsweise werden die Schritte S4 und S5 von der Steuereinrichtung 1 im Rahmen der Abarbeitung des Maschinencodes 3 des Steuerprogramms 2 automatisiert gesteuert.

In einem Schritt S6 selektiert die Steuereinrichtung 1 ein erstes Paar von unmittelbar benachbarten Zähnen 8 des Getrieberades 4'. In einem Schritt S7 wird der Induktor 12 in den Zahnzwischenraum zwischen diesen beiden Zähnen 8 eingeführt. Der entsprechende Zustand des Induktors 12 ist in FIG 3 dargestellt. In einem Schritt S8 wird der Induktor 12 mit Wechselstrom I beaufschlagt. Der Wechselstrom I erzeugt in mindestens einem der Zähne 8 des entsprechenden Paares von Zähnen 8 Wirbelströme. Durch die Wirbelströme wird in Verbindung mit dem Ohmschen Widerstand des entsprechenden Zahns 8 der entsprechende Zahn 8 erwärmt.

Es ist möglich, dass der Induktor 12 entsprechend der Darstellung in FIG 3 näher an dem einen Zahn 8 des entsprechenden Paares von Zähnen 8 angeordnet ist als an dem anderen Zahn 8. In diesem Fall wird im Wesentlichen nur einer der beiden Zähne 8 in nennenswertem Umfang erwärmt. Alternativ ist es möglich, dass der Induktor 12 - exakt oder zumindest in etwa - in der Mitte zwischen den beiden Zähnen 8 des entsprechenden Paares von Zähnen 8 angeordnet ist. In diesem Fall werden beide Zähne 8 mehr oder minder gleichmäßig erwärmt.

Nachdem der Induktor 12 in den jeweiligen Zahnzwischenraum eingeführt ist, wird der Induktor 12 in der Regel entsprechend der jeweiligen Zahnflanke verfahren, um nach und nach die gesamte Zahnflanke zu erwärmen - siehe den Pfeil A in FIG 3. Dies ist jedoch nicht stets und unbedingt erforderlich.

Wenn - bezogen auf den jeweiligen Zahnzwischenraum - der jeweilige Erwärmungsvorgang beendet ist, wird der Induktor 12 gemäß FIG 2 in einem Schritt S9 aus dem entsprechenden Zahnzwischenraum ausgefahren.

In einem Schritt S10 prüft die Steuereinrichtung 1, ob das induktive Erwärmen beendet werden soll. Insbesondere kann die Steuereinrichtung 1 im Schritt S10 prüfen, ob bereits alle zu erwärmenden Zähne 8 erwärmt wurden. Wenn das induktive Erwärmen nicht beendet werden soll, geht die Steuereinrichtung 1 zu einem Schritt S11 über, in dem sie das nächste Paar von Zähnen 8 selektiert. Der Begriff "nächste" bezieht sich in diesem Zusammenhang auf das Paar von Zähnen 8, das zeitlich als nächstes selektiert wird. Es kann sich, bezogen auf das zuvor selektierte Paar von Zähnen 8, um das geometrisch nächste Paar von Zähnen 8 handeln. Dies ist jedoch nicht zwingend erforderlich. Vom Schritt S11 geht die Steuereinrichtung 1 zum Schritt S7 zurück.

Die Schritte S6 bis S11 werden von der Steuereinrichtung 1 automatisiert gesteuert. Sie sind Bestandteil des Steuerprogramms 2.

Wenn das induktive Erwärmen vollständig beendet werden soll, wird zu Schritten S12 und S13 übergegangen. Im Schritt S12 wird der Induktor 12 aus dem Werkzeughalter 7 ausgespannt. Im Schritt S13 wird ein Bearbeitungswerkzeug 13 in dem Werkzeughalter 7 eingespannt (siehe FIG 5). Das Bearbeitungswerkzeug 13 kann beispielsweise ein Fräs- oder Schleifkopf sein. Im Falle eines Fräskopfes kann es sich um denselben Fräskopf 6 handeln, der im Rahmen der Ausführung des Schrittes S3 verwendet wurde. Alternativ kann es sich um einen anderen Fräskopf handeln. Bezüglich der Schritte S12 und S13 gelten die obigen Ausführungen zu den Schritten S4 und S5 analog: Sie können von einem Menschen ausgeführt werden, werden jedoch in der Regel von der Steuereinrichtung 1 im Rahmen der Ausführung des Steuerprogramms 2 automatisiert gesteuert.

In einem Schritt S14 erfolgt mittels des Bearbeitungswerkzeugs 13 eine Nachbearbeitung der Zähne 8 des Getrieberades 4'. Der Schritt S14 wird von der Steuereinrichtung 1 im Rahmen der Abarbeitung des Maschinencodes 3 automatisiert gesteuert.

Schließlich wird in einem Schritt S15 das Getrieberad 4' aus dem Werkstückhalter 5 der Mehrachs-Werk¬zeugmaschine ausgespannt. Das Ausspannen wird in der Regel von einem Menschen (oder mehreren Menschen) oder einem Roboter durchgeführt. Der Schritt S15 ist in FIG 2 nur gestrichelt dargestellt, um anzudeuten, dass es sich - analog zum Schritt S1 - um einen Schritt handelt, der nicht von der Steuereinrichtung 1 ausgeführt wird.

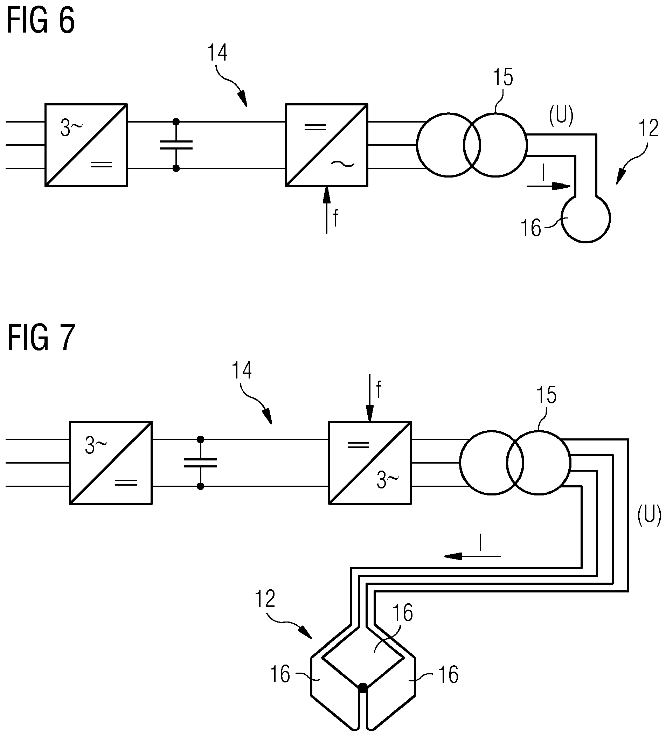

Wie aus den FIG 6 und 7 ersichtlich ist, wird der Induktor 12 zum induktiven Erwärmen des jeweiligen Zahns 8 (bzw. des jeweiligen Paares von Zähnen 8) aus einem Umrichter 14 mit Wechselstrom I gespeist. Der Wechselstrom I weist eine Nennstromstärke und eine Grundfrequenz f auf.

Die Grundfrequenz f liegt in der Regel zwischen 5 kHz und 40 kHz. Vorzugsweise liegt sie bei mindestens 16 kHz, insbesondere bei mindestens 32 kHz. Die Grundfrequenz f kann fest vorgegeben sein. Vorzugsweise wird die Grundfrequenz f dem Umrichter 14 (= der Stromversorgungseinrichtung des Induktors 12) von der Steuereinrichtung 1 vorgegeben.

Die Nennstromstärke des Wechselstroms I ist erheblich. Die Nennstromstärke kann größer als 1 kA sein. Die erforderliche Wechselspannung U ist hingegen relativ gering (in der Regel 40 V bis 100 V). Vorzugsweise ist daher zwischen der Stromversorgungseinrichtung 14 und dem Induktor 12 ein Transformator 15 angeordnet. Über dem Transformator 15 wird die von der Stromversorgungseinrichtung 14 abgegebene Wechselspannung - beispielsweise 400 V oder 690 V - vor dem Zuführen zum Induktor 12 herunter transformiert. Hiermit korrespondierend wird die Stromstärke entsprechend herauf transformiert.

Der Transformator 15 weist ein Übersetzungsverhältnis auf. Das Übersetzungsverhältnis kann nach Bedarf gewählt sein. In der Regel liegt es zwischen 5:1 und 20:1, beispielsweise zwischen 8:1 und 12:1.

Im Stand der Technik ist es üblich, den Induktor 12 als einzelne Leiterschleife 16 auszubilden, die von der Stromversorgungseinrichtung 14 des Induktors 12 mit einphasigem Wechselstrom versorgt wird. Diese Ausgestaltung ist auch im Rahmen der vorliegenden Erfindung möglich und in FIG 6 dargestellt. Vorzugsweise besteht der Induktor 12 jedoch aus drei Leiterschleifen 16. Diese Ausgestaltung ist in FIG 7 dargestellt. In diesem Fall kann der Induktor 12 von der Stromversorgungseinrichtung 14 mit dreiphasigem Wechselstrom I versorgt werden. Die drei Leiterschleifen 16 grenzen vorzugsweise überlappungsfrei aneinander an. Die drei Leiterschleifen 16 liegen in einer gemeinsamen Ebene. Sie begrenzen vorzugsweise - und zwar sowohl einzeln als auch zusammen - eine konvexe Fläche, beispielsweise einzeln jeweils ein Viereck und zusammen ein Sechseck.

Der Werkzeughalter 7 wird von dem Spindelantrieb 9 angetrieben, siehe FIG 1. Der Werkzeughalter 7 wird während des Ausfräsens der Zahnzwischenräume aus dem Getrieberadrohling 4 mittels des Spindelantriebs 9 rotiert. In der Regel erfolgt auch während der Nachbearbeitung mittels des Bearbeitungswerkzeugs 13 ein Rotieren des Werkzeughalters 7. Der Umrichter 11 des Spindelantriebs 9 (= dessen Stromversorgungseinrichtung) speist den Motor 10 in der Regel mit dreiphasigem Wechselstrom. Es ist möglich, dass die Stromversorgungseinrichtung 11 des Spindelantriebs 9 und die Stromversorgungseinrichtung 14 des Induktors 12 voneinander verschiedene Einrichtungen sind. Erfindungsgemäss wird der Induktor 12 jedoch entsprechend der Darstellung in den FIG 1 und 3 - siehe die Anordnung des Umrichters 11 in FIG 1 an der gleichen Stelle wie die Anordnung des Umrichters 14 in FIG 4 und die Gleichsetzung der Bezugszeichen 11 und 14 in FIG 4 - während des induktiven Erwärmens der Zähne 8 aus der Stromversorgungseinrichtung 11 des Spindelantriebs 9 mit Wechselstrom I versorgt. Diese Ausgestaltung ist insbesondere dann von Vorteil, wenn der Induktor 12 mit dreiphasigem Wechselstrom I gespeist wird.

Wie obenstehend erläutert, werden bei dem erfindungsgemäßen Herstellungsverfahren die Zähne 8 des Getrieberades 4' einzeln oder paarweise induktiv erwärmt. Vorzugsweise werden die Zähne 8 nach dem Beenden des induktiven Erwärmens mittels eines Kühlmediums (Druckluft oder - bevorzugt - Wasser) aktiv gekühlt. Aus diesem Grund ist in FIG 4 eine Kühleinrichtung 17 mit eingezeichnet, die in FIG 4 schematisch als Spritzdüse dargestellt ist. Mittels der Kühleinrichtung 17 wird das Kühlmedium auf den entsprechenden Zahn 8 aufgebracht. Auch das Aufbringen des Kühlmediums erfolgt durch entsprechendes Ansteuern der Mehrachs-Werkzeugmaschine durch die Steuereinrichtung 1, also im Rahmen der Abarbeitung des Maschinencodes 3 des Steuerprogramms 2.

Zur Realisierung des aktiven Kühlens nach dem induktiven Erwärmen ist es möglich, dass die Kühleinrichtung 17 an einer vorbestimmten Stelle der Mehrachs-Werkzeugmaschine angeordnet ist und das Getrieberad 4' durch entsprechende Ansteuerung des Werkstückhalters 5 jeweils entsprechend positioniert wird. Alternativ ist es möglich, dass die Kühleinrichtung 17 von der Steuereinrichtung 1 - zumindest innerhalb gewisser Grenzen - positioniert und nachgeführt werden kann.

Es ist möglich, dass das aktive Kühlen der Zähne 8 erst nach dem induktiven Erwärmen aller Zähne 8 durchgeführt wird. Auch ist es möglich, das induktive Erwärmen der Zähne 8 und das aktive Kühlen der Zähne 8 intermittierend auszuführen, also einen Zahn 8 oder zwei Zähne 8 zu erwärmen, dann diesen Zahn 8 oder diese beiden Zähne 8 zu kühlen, dann einen weiteren Zahn 8 oder zwei weitere Zähne 8 zu erwärmen usw.. Vorzugsweise jedoch erfolgen das induktive Erwärmen und das aktive Kühlen simultan. Vorzugsweise wird also während des aktiven Kühlens eines unmittelbar zuvor erwärmten Zahns 8 bzw. von zwei unmittelbar zuvor erwärmten Zähnen 8 der Induktor 12 in den Zahnzwischenraum zwischen zwei anderen Zähnen 8 eingeführt, wo der Induktor 12 mindestens einen der beiden letztgenannten Zähne 8 induktiv erwärmt.

Die vorliegende Erfindung weist viele Vorteile auf. Der größte Vorteil besteht darin, dass die gesamte Bearbeitung erfolgen kann, ohne das Getrieberad 4' zwischenzeitlich aus dem Werkstückhalter 5 ausspannen und später wieder einspannen zu müssen. Es wird also der Getrieberadrohling 4 vor dem Ausfräsen der Zahnzwischenräume in dem Werkstückhalter 5 eingespannt und bleibt dort eingespannt, bis das Getrieberad 4' nach der Nachbearbeitung der Zähne 8 aus dem Werkstückhalter 5 ausgespannt wird. Es ist also ein Herstellen des Getrieberades 4' aus dem Getrieberadrohling 4 in einer einzigen Aufspannung und in einer einzigen Mehrachs-Werkzeugmaschine möglich. Das Steuerprogramm 2 kann insbesondere als einheitliches Steuerprogramm ausgebildet sein, das die gesamte Vorgehensweise von FIG 2 realisiert, also sowohl das Fräsen des Schrittes S3 als auch das Härten der Schritte S6 bis S11 als auch die Nachbearbeitung des Schrittes S14 und ggf. auch die Schritte S2, S4, S5, S12 und S13. Durch die Frequenzeinstellung des Wechselstroms I des Induktors 12 kann weiterhin die Eindringtiefe kontrolliert werden, so dass - im Vergleich zu einer vollvolumigen Erwärmung des Getrieberades 4 - ein weiterer Steuerparameter für Optimierungen zur Verfügung steht. Die erfindungsgemäße Vorgehensweise führt zum einen zu einer beschleunigten Fertigung des Getrieberades 4' und zum anderen zu einer verbesserten Fertigungsgenauigkeit. Weiterhin ist eine vollvolumige Durchwärmung des Getrieberades 4' nicht mehr erforderlich, so dass auch eine Energieeinsparung realisiert werden kann. Aufgrund der nur lokalen Erwärmung der Zähne 8 des Getrieberades 4 - im Gegensatz zu einer vollvolumigen Erwärmung des Getrieberades 4' verringert sich weiterhin der sogenannte Härteverzug, so dass das Ausfräsen der Zahnzwischenräume mit einem geringeren Aufmaß realisiert werden kann und dadurch die Nachbearbeitung einfacher und schneller erfolgen kann.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Herstellungsverfahren für ein Getrieberad (4'),
- wobei ein Getrieberadrohling (4) in einem Werkstückhalter (5) einer Mehrachs-Werkzeugmaschine eingespannt wird,
- wobei mittels eines in einem Werkzeughalter (7) der Mehr¬achs-Werkzeugmaschine eingespannten Fräskopfes (6) aus dem Getrieberadrohling (4) Zahnzwischenräume ausgefräst werden, so dass durch das Ausfräsen der Zahnzwischenräume aus dem Getrieberadrohling (4) ein Zähne (8) aufweisendes Getrieberad (4') wird,
- wobei der Werkzeughalter (7) während des Ausfräsens der Zahnzwischenräume aus dem Getrieberadrohling (4) mittels eines Spindelantriebs (9) rotiert wird,
- wobei der Fräskopf (6) aus dem Werkzeughalter (7) ausgespannt wird und ein Induktor (12) in dem Werkzeughalter (7) eingespannt wird,
- wobei der Induktor (12) nacheinander zwischen je zwei unmittelbar benachbarte Zähne (8) des Getrieberades (4') eingefahren wird und mindestens einer der beiden unmittelbar benachbarten Zähne (8) mittels des Induktors (12) induktiv erwärmt wird,
- wobei der Induktor (12) während des induktiven Erwärmens der Zähne (8) aus einer Stromversorgungseinrichtung (11) des Spindelantriebs (9) mit Wechselstrom (I) versorgt wird,
- wobei der Induktor (12) aus dem Werkzeughalter (7) ausgespannt wird und ein Bearbeitungswerkzeug (13) in dem Werkzeughalter (7) eingespannt wird,
- wobei mittels des Bearbeitungswerkzeugs (13) eine Nachbearbeitung der Zähne (8) des Getrieberades (4') erfolgt.

2. Herstellungsverfahren nach Anspruch 1,
**dadurch gekennzeichnet, dass** die Mehrachs-Werkzeugmaschine als mindestens fünfachsige Werkzeugmaschine ausgebildet ist.

3. Herstellungsverfahren nach Anspruch 1 oder 2,
**dadurch gekennzeichnet, dass** der jeweils mindestens eine induktiv erwärmte Zahn (8) nach dem Beenden des induktiven Erwärmens mittels eines Kühlmediums aktiv gekühlt wird und dass während des aktiven Kühlens des mindestens einen induktiv erwärmten Zahns (8) der Induktor (12) zwischen zwei andere unmittelbar benachbarte Zähne (8) des Getrieberades (4') eingefahren wird und mittels des Induktors (12) mindestens einer der beiden letztgenannten unmittelbar benachbarten Zähne (8) induktiv erwärmt wird.

4. Herstellungsverfahren nach Anspruch 1, 2 oder 3,
**dadurch gekennzeichnet, dass** der Wechselstrom (I) eine Frequenz (f) zwischen 5 kHz und 40 kHz aufweist.

5. Herstellungsverfahren nach Anspruch 4,
**dadurch gekennzeichnet, dass** die Frequenz (f) des Wechselstroms (I) bei mindestens 16 kHz liegt, vorzugsweise bei mindestens 32 kHz.

6. Herstellungsverfahren nach Anspruch 4 oder 5,
**dadurch gekennzeichnet, dass** die Frequenz (f) des Wechselstroms (I) der Stromversorgungseinrichtung (14) des Spindelantriebs (9) von einer Steuereinrichtung (1) der Mehrachs-Werkzeugmaschine vorgegeben wird.

7. Herstellungsverfahren nach einem der obigen Ansprüche,
**dadurch gekennzeichnet, dass** die Wechselspannung vor dem Zuführen zum Induktor (12) mittels eines Transformators (15) herunter transformiert wird.

8. Herstellungsverfahren nach Anspruch 7,
**dadurch gekennzeichnet, dass** ein Übersetzungsverhältnis des Transformators (15) zwischen 5:1 und 20:1 liegt.

9. Herstellungsverfahren nach einem der obigen Ansprüche,
**dadurch gekennzeichnet, dass** der Induktor (12) mit einphasigem oder dreiphasigem Wechselstrom (I) versorgt wird.

## Claims

1. Manufacturing process for a gearwheel (4'), wherein
- a gearwheel blank (4) is clamped in a workholder (5) of a multi-axis machine tool,
- tooth spaces are milled out of the gearwheel blank (4) by a milling head (6) clamped in a tool holder (7) of the multi-axis machine tool, so that by milling out the tooth spaces from the gearwheel blank (4) a gearwheel (4') having teeth (8) is produced,
- the tool holder (7) is rotated by means of a spindle drive (9) while the tooth spaces are milled out of the gearwheel blank (4),
- the milling head (6) is unclamped from the tool holder (7) and an inductor (12) is clamped in the tool holder (7),
- the inductor (12) is inserted successively between two immediately adjacent teeth (8) of the gearwheel (4') in each case and at least one of the two immediately adjacent teeth (8) is inductively heated by means of the inductor (12),
- the inductor (12) is supplied with alternating current (I) from a current supply device (11) of the spindle drive (9) during the inductive heating of the teeth (8),
- the inductor (12) is unclamped from the tool holder (7) and a machining tool (13) is clamped in the tool holder (7),
- the teeth (8) of the gearwheel (4') are remachined by the machining tool (13).

2. Manufacturing process according to claim 1,
**characterised in that** the multi-axis machine tool is designed as an at least five-axis machine tool.

3. Manufacturing process according to claim 1 or 2,
**characterised in that** the in each case at least one inductively heated tooth (8) is actively cooled by means of a cooling medium after the termination of the inductive heating and that during the active cooling of the at least one inductively heated tooth (8) the inductor (12) is inserted between two other immediately adjacent teeth (8) of the gearwheel (4') and by means of the inductor (12) at least one of the two latter immediately adjacent teeth (8) is inductively heated.

4. Manufacturing process according to claim 1, 2 or 3,
**characterised in that** the alternating current (I) has a frequency (f) between 5 kHz and 40 kHz.

5. Manufacturing process according to claim 4,
**characterised in that** the frequency (f) of the alternating current (I) is at least 16 kHz, preferably at least 32 kHz.

6. Manufacturing process according to claim 4 or 5,
**characterised in that** the frequency (f) of the alternating current (I) is specified to the current supply device (14) of the spindle drive (9) by a control device (1) of the multi-axis machine tool.

7. Manufacturing process according to one of the above claims,
**characterised in that** the alternating voltage is transformed downward by a transformer (15) before being supplied to the inductor (12).

8. Manufacturing process according to claim 7,
**characterised in that** a transformer ratio of the transformer (15) is between 5:1 and 20:1.

9. Manufacturing process according to one of the above claims,
**characterised in that** the inductor (12) is supplied with single-phase or three-phase alternating current (I).

## Revendications

1. Procédé de fabrication d'une roue (4') d'engrenage,
- dans lequel on serre une ébauche (4) de roue d'engrenage dans un porte-pièce (5) d'une machine outil à plusieurs axes,
- dans lequel on fraise au moyen d'une tête (6) de fraisage, serrée dans un porte-outil (7) de la machine-outil à plusieurs axes, des espaces d'entre-dents dans l'ébauche (4) de roue d'engrenage de manière à obtenir, par le fraisage des espaces d'entre-dents, à partir de l'ébauche (4) de roue d'engrenage, une roue (4') d'engrenage ayant une dent (8),
- dans lequel on fait tourner le porte-outil (7) au moyen d'un entraînement (9) à broche pendant le fraisage des espaces d'entre-dents dans l'ébauche (4) de roue d'engrenage,
- dans lequel on desserre la tête (6) de fraisage du porte-outil (7) et on serre un inducteur (12) dans le porte-outil (7),
- dans lequel on introduit l'inducteur (12) successivement entre respectivement deux dents (8) directement voisines de la roue (4') d'engrenage et on chauffe inductivement au moyen de l'inducteur (12) au moins l'une des deux dents (8) directement voisines,
- dans lequel on alimente en courant (I) alternatif l'inducteur (12) pendant le chauffage inductif des dents (8) à partir d'un dispositif (11)d'alimentation en courant de l'entraînement (9) par broche,
- dans lequel on desserre l'inducteur (12) du porte-outil (7) et on serre un outil (13) d'usinage dans le porte-outil (7),
- dans lequel on effectue au moyen de l'outil (13) d'usinage une reprise des dents (8) de la roue (4') d'engrenage.

2. Procédé de fabrication suivant la revendication 1,
**caractérisé en ce que** la machine-outil a plusieurs axes et est constituée sous la forme d'au moins une machine-outil à cinq axes.

3. Procédé de fabrication suivant la revendication 1 ou 2,
**caractérisé en ce que**, après la fin du chauffage inductif, l'on refroidit activement, au moyen d'un fluide réfrigérant, au moins une dent (8) réchauffée inductivement et **en ce que**, pendant le refroidissement actif de la au moins une dent (8) chauffée inductivement, on introduit l'inducteur (12) entre deux autres dents (8) directement voisines de la roue (4') d'engrenage et on chauffe inductivement, au moyen de l'inducteur (12), au moins l'une des deux dents (8) directement voisines mentionnées en dernier.

4. Procédé de fabrication suivant la revendication 1, 2 ou 3,
**caractérisé en ce que**
le courant (I) alternatif a une fréquence (f) comprise entre 5 kHz et 40 kHz.

5. Procédé de fabrication suivant la revendication 4,
**caractérisé en ce que**
la fréquence (f) du courant (I) alternatif est d'au moins 16 kHz, de préférence d'au moins 32 kHz.

6. Procédé de fabrication suivant la revendication 4 ou 5,
**caractérisé en ce que**
la fréquence (f) du courant (I) alternatif du dispositif (14) d'alimentation en courant de l'entraînement (9) par broche est prescrite par un dispositif (1) de commande de la machine-outil à plusieurs axes.

7. Procédé de fabrication suivant l'une des revendications précédentes, **caractérisé en ce que** l'on abaisse la tension alternative, avant de l'appliquer à l'inducteur (12), au moyen d'un transformateur (15).

8. Procédé de fabrication suivant la revendication 7,
cratérisé en ce qu'un rapport d'abaissement du transformateur (15) est compris entre 5:1 et 20:1.

9. Procédé de fabrication suivant l'une des revendications précédentes,
**caractérisé en ce que** l'on alimente l'inducteur (12) par un courant (I) alternatif monophasé ou triphasé.
